# EUROPÄISCHE PATENTANMELDUNG

(11) **EP 0 974 861 A2**
(43) Veröffentlichungstag der Anmeldung: **26.01.2000**
(21) Anmeldenummer: 99113137.6
(22) Anmeldetag: 07.07.1999
(51) Int. Cl.: G02F 1/133, G02B 5/30, G02F 1/141, G02F 1/1347, G02F 1/1335, G02F 1/01, H04B 10/135, H04B 10/18

(54) **Vorrichtung zum Regeln der Lichtpolarisation**

(30) Priorität: 24.07.1998 DE 19833312
(71) Anmelder: Deutsche Telekom AG, 53113 Bonn (DE)
(72) Erfinder: Dultz, Wolfgang, Prof.Dr., 65936 Frankfurt (DE); Frins, Erna, 11600 Montevideo (UY); Schmitzer, Heidrun, Dr., 93051 Regensburg (DE); Beresnev, Leonid, Dr., Columbia, MD 21044 (US); Haase, Wolfgang, Prof.Dr., 64354 Rheinheim (DE); Noé, Reinhold, Prof. Dr.-Ing., 33100 Paderborn (DE)

(57) **Zusammenfassung**

Optische Kommunikationsnetze umfassen optische Fasern (30), die die Polarisation des geführten Lichtes zeitlichen Schwankungen unterwerfen, sowie polarisationsabhängige Komponenten (50). Zur Optimierung der optischen Nachrichtverarbeitung in den einzelnen Komponenten des optischen Netzes ist es notwendig, neben der Frequenz und der Intensität auch die Polarisation des Lichtes innerhalb enger festgelegter Grenzen zu halten. Dies wird dadurch erreicht, daß jeder polarisationsabhängigen Komponente (50) Licht mit deren charakteristischen Polarisation zugeführt wird. Obwohl es zahlreiche Ansätze hierfür gibt, ist es bisher noch nicht gelungen, eine einfache und kostengünstige Polarisations-Regelvorrichtung zu entwickeln.

Gemäß der Erfindung umfaßt die Polarisations-Regelvorrichtung (10) einen Eingang (20) zum Empfangen von Licht mit einer Polarisation Pₑ, einen Ausgang (40) zum Auskoppeln von Licht mit einer vorbestimmten Polarisation Pₐ, eine elektrisch ansteuerbare Polarisations-Stelleinrichtung (60) zum Umwandeln des empfangenen Lichtes mit der Polarisation Pₑ in Licht mit der vorbestimmten Polarisation Pₐ, einen der Polarisations-Stelleinrichtung (60) folgenden Strahlteiler (70), einen Analysator (80) mit der vorbestimmten Polarisation Pₐ, einen dem Analysator (80) folgenden lichtempfindlichen Detektor (90) sowie eine Steuersignale liefernde Einrichtung (100), die eingangsseitig mit dem lichtempfindlichen Detektor (90) und ausgangsseitig mit der Polarisations-Stelleinrichtung (60) elektrisch verbunden ist.

## Beschreibung

Die Erfindung betrifft eine Vorrichtung zum Regeln der Polarisation einfallenden Lichtes nach Anspruch 1, eine Polarisations-Stellvorrichtung zum Einsatz in einer solchen Polarisations-Regelvorrichtung sowie ein optisches Kommunikationssystem, in dem solche Polarisations-Regelvorrichtungen eingesetzt werden.

Die Nachrichtenübertragung über mittlere und größere Distanzen erfolgt in zunehmendem Maße optisch über Glasfasern eines photonischen Netzes. Die zu übertragenden Nachrichten werden durch elektrisch ansteuerbare Lichtquellen, wie z.B. Laser oder Leuchtdioden, als digitale Pulsfolgen in die Glasfasern eingespeist, mit Hilfe von Faserverstärkern optisch verstärkt, mit Kopplern aufgeteilt und wieder vereinigt, optisch geschaltet und schließlich mit Halbleiterdioden detektiert und elektrisch verarbeitet. Das die Nachrichten übertragende Licht wird bezüglich seiner Frequenz (Wellenlänge) und seiner Intensität sorgfältig ausgewählt und zur Optimierung der optischen Nachrichtenverarbeitung in den einzelnen optischen Komponenten des photonischen Netzes innerhalb enger festgelegter Grenzen gehalten. Neben der Intensität und der Frequenz ist die Polarisation die dritte physikalische Eigenschaft des Lichtes. Es ist bekannt, daß die optische Glasfaser als wichtigste Netzkomponente den Polarisationszustand des geführten Lichtes unregelmäßig und zeitabhängig verändert, so daß bei einer optischen Nachrichtenübertragung regelmäßig keine zeitlich stationäre Polarisation angenommen werden kann.

Obwohl viele optische Bauteile eines Glasfasernetzes polarisationsabhängige Charakteristiken haben, versucht man, diese Eigenschaften zu unterdrücken, indem die optischen Bauteile polarisationsneutral ausgebildet werden, so daß für alle Polarisationszustände die gleiche Lichtintensität am Ausgang des Bauteils vorliegt. Aufgrund der polarisationsabhängigen Eigenschaften optischer Bauteile gelingt dies immer nur beschränkt in gewissen Wellenlängen- oder Intensitäts-Bereichen. Polarisationsabhängige optische Komponenten können dadurch polarisationsneutral gemacht werden, daß diese doppelt ausgebildet werden. Das zur Nachrichtenübertragung verwendete Licht wird dazu in zwei orthogonale Polarisationszustände aufgespalten und jeweils einer der beiden Kompenten zugeführt, getrennt verarbeitet und dann wieder zusammengefügt. Allerdings wird bei einer solchen Polarisationsneutralisierung einer optischen Komponente die Lichtintensität erheblich geschwächt, so daß eine Optimierung des photonischen Netzes nicht möglich ist.

Eine Möglichkeit, ein photonisches Netz zu optimieren, besteht darin, am Ausgang jeder optischen Faser die zeitlich schwankende Polarisation des Lichtes mit einem Polarimeter zu messen und anschließend die Polarisation mit einem Stellelement auf den gewünschten Wert einzustellen. Ein Nachteil ist darin zu sehen, daß Polarimeter komplizierte und teure Meßinstrumente sind und daher zur Optimierung eines photonischen Netzes nicht geeignet sind.

Der Erfindung liegt daher die Aufgabe zugrunde, eine Polarisations-Regelvorrichtung sowie eine Polarisations-Stellvorrichtung zum Einsatz in einer solchen Polarisations-Regelvorrichtung bereitzustellen, die einfach und kostengünstig hergestellt werden können und das Anpassen einer zeitlich schwankenden Polarisation an den vorbestimmten Polarisationzustand einer polarisationsabhängigen Komponente vereinfachen.

Ausgangspunkt der Erfindung ist die Tatsache, daß beispielsweise eine optische Faser den Polarisationszustand eingekoppelter Lichtstrahlen unregelmäßig und zeitabhängig ändert, so daß eine mit der optischen Faser verbundene polarisationsabhängige optische Komponente, wie z.B. interferometrische Koppler, Schalter, Faserverstärker, Fasergitter und dergleichen nicht optimal betrieben werden können.
Kerngedanke der Erfindung ist es daher, eine Regelvorrichtung zu schaffen, mit der der Polarisationszustand des Lichtes vor oder nach einer polarisationsabhängigen Komponente erfaßt und danach auf einen optimalen Wert eingestellt werden kann. Eine Messung der Polarisation wie beim oben beschriebenen Polarimeter erfolgt hierbei nicht.

Dieses technische Problem löst die Erfindung mit den Merkmalen des Anspruches 1.

Um auf einfache Weise den Polarisationszustand eines eingekoppelten Lichtes erkennen und an den Polarisationszustand einer optischen Komponenten optimal anpassen zu können, umfaßt die Vorrichtung zum Regeln der Polarisation einen Eingang zum Empfangen von Licht mit einer, in der Regel zeitlich schwankenden Polarisation Pₑ. Am Ausgang liefert die Regelvorrichtung ein Licht mit einer vorbestimmten Polarisation Pₐ. Ferner ist eine elektrisch ansteuerbare Polarisations-Stelleinrichtung zum Umwandeln des empfangenen Lichtes mit der Polarisation Pₑ in Licht mit der vorbestimmten Polarisation Pₐ vorgesehen. In Richtung des Strahlenganges folgt der Polarisations-Stelleinrichtung ein im wesentlichen polarisationsunabhängiger Strahlteiler, der das Licht teilweise zum Ausgang durchläßt und teilweise auf einen Analysator mit der vorbestimmten Polarisation Pₐ umlenkt.

In Richtung des umgelenkten Strahlenganges folgt dem Analysator ein lichtempfindlicher Detektor, der eingangsseitig mit einer Regeleinrichtung verbunden ist. Ausgangsseitig ist die Regeleinrichtung mit der Polarisations-Stelleinrichtung elektrisch verbunden.

Vorteilhafte Weiterbildungen sind den Unteransprüchen zu entnehmen.

Es sind Polarisations-Stelleinrichtungen bekannt, die mit Hilfe von drei Spulen aus optischen Fasern aufgebaut sind und mechanisch durch Kippen der Spulen verstellbar sind. Um einen fluktuierenden Polarisationszustand in einen vorbestimmten Polarisationszustand umwandeln zu können, ohne daß ein mechanisches Kippen oder Drehen von Faserspulen erforderlich ist, ist die Polarisations-Stelleinrichtung mit wenigstens zwei hintereinander angeordneten, doppelbrechenden ferroelektrische Flüssigkristallplatten mit DHF (Deformed Helix Ferroelectric)-Effekt aufgebaut, die jeweils mit der Regeleinrichtung elektrisch verbunden sind und deren Indikatrix jeweils in Abhängigkeit von der durch die Regeleinrichtung angelegten Spannung individuell drehbar ist. Die erste ferroelektrische DHF-Flüssigkristallplatte weist eine im wesentlichen konstante Verzögerung von λ /4 + n* λ und die zweite ferroelektrische DHF-Flüssigkristallplatte eine im wesentlichen konstante Verzögerung von λ / 2 + n * λ auf, wobei n > = 0 und eine ganze Zahl ist. Ferroelektrische Flüssigkristalle mit deformierter Helix (DHF) werden beispielsweise in dem Aufsatz "Deformed Helix Ferroelectric Liquid Crystal Display : A new Electrooptical Mode in Ferroelectric Chiral Smectic C Liquid Crystals", erschienen in Liquid Crystals, Vol. 5,
Seite 1171 - 1177, 1989, von L.A. Beresnev. et al. beschrieben.

Um die Polarisation eines einfallenden Lichtstrahles in ein Licht mit elliptischem Polarisationszustand umwandeln zu können, weist die Polarisations-Stelleinrichtung eine dritte doppelbrechende ferroelektrische Flüssigkristallplatte mit DHF-Effekt auf, die ebenfalls mit der Regeleinrichtung elektrisch verbunden ist und deren Indikatrix in Abhängigkeit von der durch die Regeleinrichtung angelegten Spannung individuell drehbar ist. Die dritte ferroelektrische DHF-Flüssigkristallplatte weist eine im wesentlichen konstante Verzögerung von λ 4 + n * λ auf, wobei n > = 0 und eine ganze Zahl ist. Die an die DHF-Flüssigkristallplatten angelegte Steuerspannung liegt in einem Bereich von 0 - 20 Volt.

Gemäß einer alternativen Ausführungsform werden anstelle der doppelbrechenden ferroelektrischen DHF-Flüssigkristallplatten drehbar gelagerte, doppelbrechende Quarzkristallplatten verwendet, die jeweils mit der Regeleinrichtung elektrisch verbunden und in Abhängigkeit von der durch die Regeleinrichtung angelegten Spannung individuell drehbar sind. An dieser Stelle sei darauf hingewiesen, daß es sich bei der Doppelbrechung um eine sogenannte lineare Doppelbrechung handelt, d.h. beim Durchgang des Lichtes durch eine lineare doppelbrechende DHF-Flüssigkristallplatte oder durch eine lineare doppelbrechende Quarzkristallplatte bilden sich zwei Eigenwellen mit linearer Polarisation aus.

Gemäß einem zweiten Gesichtspunkt der Erfindung wird eine Polarisations-Stellvorrichtung zum Einsatz in eine Polarisations-Regelvorrichtung bereitgestellt.

Gemäß einem dritten Gesichtspunkt der Erfindung wird ein optisches Kommunikationssystem verfügbar gemacht, das hinsichtlich der Polarisation des übertragenen Lichtes optimiert werden kann, indem jeder optischen, polarisationsabhängigen Komponente eine Polarisations-Regelvorrichtung nach Anspruch 1 zugeordnet wird.

Die Erfindung wird nachstehend anhand der Ausführungsbeispiele in Verbindung mit den beiliegenden Zeichnungen näher erläutert. Es zeigen:
- Figur 1: eine vereinfachte Prinzipdarstellung der Polarisations-Regelvorrichtung
- Figur 2: eine Poincare-Kugel zur Erläuterung der Wirkungsweise der in Figur 1 verwendeten Polarisations-Stelleinrichtung.

Optische Kommunikationsnetze weisen zahlreiche Glasfaserstrecken, die die Polarisation eingekoppelter Lichtstrahlen unregelmäßigen Schwankungen unterwerfen, sowie polarisationsabhängige Komponenten, wie zum Beispiel interferometrische Koppler, optische Schalter, Faserverstärker und Fasergitter, auf. Um ein optimiertes optisches Netz zu erhalten, müssen neben der Frequenz und Intensität auch die Polarisation der zur Übertragung verwendeten Lichtstrahlen innerhalb vorgegebener Grenzen gehalten werden. Eine Optimierung des optischen Netzes hinsichtlich der Polarisation wird dadurch erreicht, daß jeder optischen, polarisationsabhängigen Komponente eine Polarisations-Regelvorrichtung 10 vor- oder nachgeschaltet wird. Wie nachfolgend noch ausführlicher erläutert, paßt die Polarisations-Regeleinrichtung 10 den fluktuierenden Polarisationszustand der an einem Faserende austretenden Lichtstrahlen an die Polarisation einer polarisationsabhängigen Komponente optimal an.

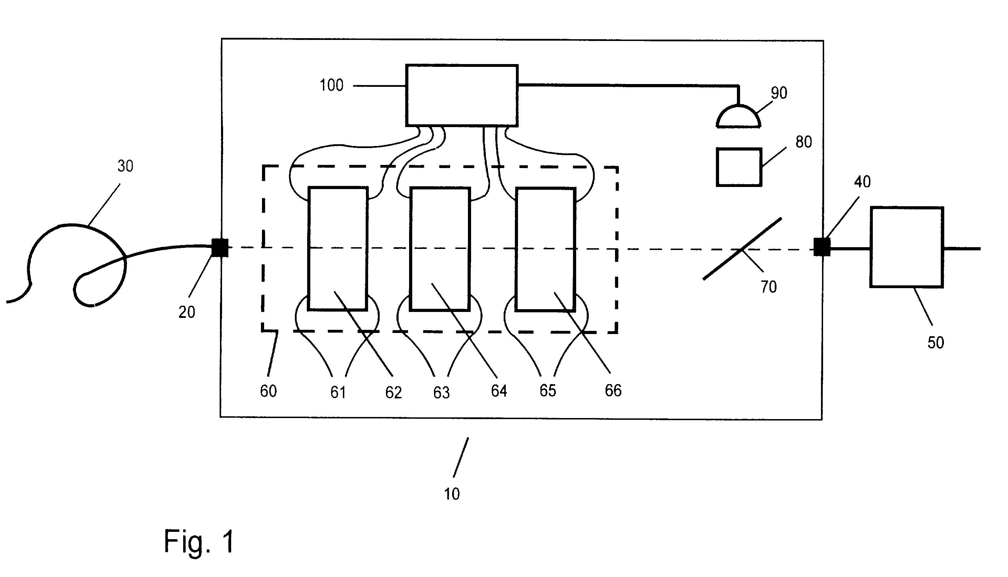

In Figur 1 ist eine solche Polarisations-Regelvorrichtung 10 dargestellt. Die Polarisations-Regelvorrichtung 10 ist über einen Eingang 20 mit einer optischen Faser 30 eines optischen Kommunikationsnetzes verbunden.

Am Ausgang 40 ist die Polarisations-Regelvorrichtung 10 mit einer polarisationsabhängigen Komponente 50, beispielsweise einem optischen Faserverstärker verbunden. Obwohl die Polarisations-Regelvorrichtung 10 mit diskreten Bauelementen aufgebaut ist, sei bereits an dieser Stelle darauf hingewiesen, daß diese auch als integrierter Baustein ausgebildet sein kann. Die Polarisations-Regelvorrichtung 10 kann auch integraler Bestandteil des optischen Faserverstärkers 50 sein. In den Strahlengang des am Eingang 20 eintretenden Lichtes ist zunächst eine Polarisations-Stelleinrichtung 60 angeordnet, der ein polarisationsunabhängiger Strahlteiler 70 folgt. Der Strahlteiler 70 läßt den größten Lichtanteil über den Ausgang 40 zum optischen Faserverstärker 50 passieren. Lediglich ein kleiner Lichtanteil wird über einen Analysator 80 auf einen lichtempfindlichen Detektor 90 gelenkt. Der Analysator 80 weist eine vorbestimmte Polarisation Pₐ auf, die der optimalen Polarisation für den optischen Faserverstärkers 50 entspricht. Der lichtempfindliche Detektor 90 ist elektrisch mit einem an sich bekannten Regler 100 verbunden, der an seinem Ausgang im vorliegenden Beispiel drei unabhängige Steuersignale erzeugt.

Es sei nunmehr angenommen, daß der optische Faserverstärker 50 eine elliptische Polarisation bevorzugt, und der Polarisationszustand des über die Faser 30 und den Eingang 20 eingekoppelten Lichtstrahles zeitlichen Schwankungen unterworfen ist. Zur optimalen Anpassung der Faser 30 an den Faserverstärker 50 ist es notwendig, daß die Polarisation des einfallenden Lichtes in eine elliptische Polarisation, die der optimalen Polarisation für den optischen Faserverstärker 50 entspricht, umgewandelt wird. Grundsätzlich ist es möglich, eine einzelne Verzögerungsplatte mit linearer Doppelbrechung zu verwenden. Eine solche Verzögerungsplatte muß jedoch eine steuerbare Elliptizität, Achsenorientierung und Verzögerung aufweisen, was allerdings sehr schwer und nur mit großem Aufwand realisiert werden kann.

Stattdessen wird die einfach aufgebaute Polarisations-Stelleinrichtung 60 verwendet, die gemäß einer ersten Ausführungsform mit Bezug auf den Strahlengang des am Eingang 20 eintretenden Lichtstrahls drei hintereinander angeordnete ferroelektrische Flüssigkristallplatten 62, 64 und 66 mit deformierter Helix (Deformed Helix Ferroelectric, DHF), nachfolgend kurz DHF-Flüssigkristallplatte genannt, aufweist. Die erste DHF-Flüssigkristallplatte 62 weist zwei Elektroden 61 auf, an die die erste Steuerspannung des Reglers 100 angelegt wird. Die Verzögerung der DHF-Flüssigkristallplatte 62 beträgt λ / 4 und bleibt im wesentlichen unverändert. Die zweite DHF-Flüssigkristallplatte 64 weist Elektroden 63 auf, an die die zweite Steuerspannung des Reglers 100 angelegt wird. Die Verzögerung der DHF-Flüssigkristallplatte 64 beträgt λ / 2 uund bleibt im wesentlichen unverändert. Die dritte DHF-Flüssigkristallplatte 66 weist Elektroden 65 auf, an die die dritte Steuerspannung des Reglers 100 angelegt wird. Die Verzögerung der DHF-Flüssigkristallplatte 66 beträgt wiederum λ / 4 und ist im wesentlichen konstant. Die DHF-Flüssigkristalle der DHF-Flüssigkristallplatten 62, 64 und 66 haben die Eigenschaft, beim Anlegen eines elektrischen Steuerfeldes die Achsorientierung ihrer jeweiligen Indikatrix zu ändern. Da die Achsorientierung der DHF-Flüssigkristalle nach dem DHF-Effekt mit der angelegten Steuerspannung korreliert ist, lassen sich an den DHF-Flüssigkristallplatten 62, 64 und 66 beliebige Achsorientierungen und damit beliebige Polarisations-Umsetzungen erreichen.

Nachfolgend wird die Funktionsweise der Polarisations-Regelvorrichtung 10 und insbesondere die der Polarisations-Stelleinrichtung 60 näher erläutert. Es sei angenommen, daß aus der Faser 30 ein optischer Nachrichtenfluß mit einer zeitlich fluktuierenden Polarisation Pₑ (t) austritt. Dieses Licht durchläuft die Polarisations-Stelleinrichtung 60 und fällt mit einer Polarisation P auf den polarisationsunabhängigen Strahlteiler 70. Ein kleiner Teil des Lichtstrahles wird über den Strahlteiler 70 auf den Analysator 80 und dann auf den Detektor 90 geleitet. Der Analysator 80 projiziert aus dem umgelenkten Licht mit der Polarisation P die Polarisationskomponente Pₐ heraus, die der optimalen Polarisation für den optischen Faserverstärker 50 entspricht. Lichtstrahlen mit der Polarisation Pₐ fallen nunmehr auf den Detektor 90. Der Photodetektor 90 erzeugt ein elektrisches Signal in Abhängigkeit von der vom Analysator durchgelassenen Lichtintensität und leitet dieses Signal dem Regler 100 zu. Der Regler 100 erzeugt drei Steuerspannungen, die er an die Elektrodenpaare 61, 63 und 65 anlegt. Die Indikatrizes der DHF-Flüssigkristalle, die die DHF-Flüssigkristallplatten 62, 64 und 66 bilden, werden individuell derart gedreht, daß die Intensität des Lichtes der Polarisation Pₐ am Detektor 90 möglichst groß wird. Die Polarisations-Regelvorrichtung 10 mißt also nicht die Polarisation des Lichtes, sondern vergleicht sie nur mit einem vorbestimmten Wert und optimiert diesen durch Maximierung, beispielsweise nach einer Gradientenmethode im Parameter-Raum der Poincare-Kugel. Auf diese Weise liefert die Polarisations-Regelvorrichtung ausgangsseitig immer Lichtstrahlen der Polarisation Pₐ.

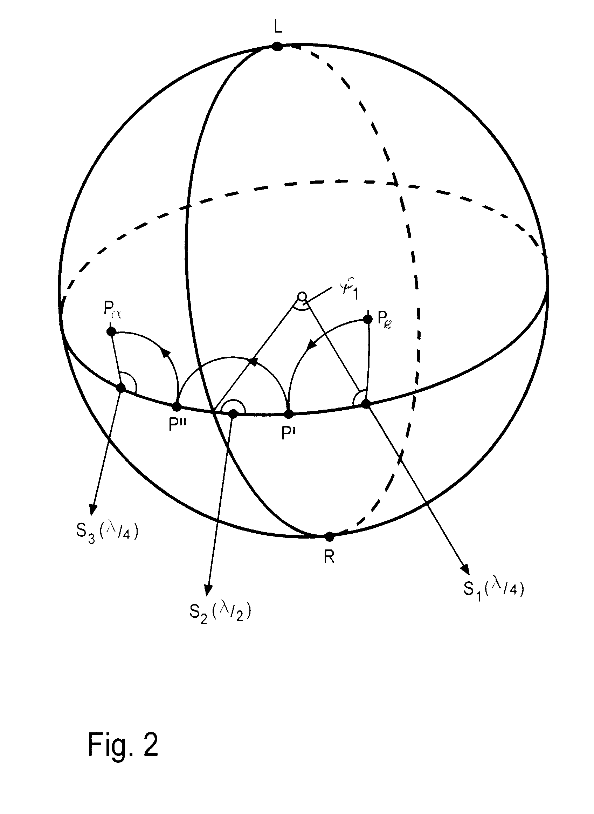

Die Wirkungsweise der drei DHF-Flüssigkristallplatten 62, 64 und 66 umfassenden Polarisations-Stelleinrichtung 60 zur Anpassung der aus der Faser 30 austretenden Lichtstrahlen der Polarisation Pₑ an die Polarisation Pₐ des optischen Faserverstärkers 50 wird nachfolgend mit Hilfe der in Figur 2 dargestellten Poincare-Kugel erläutert.
Der Polarisationszustand Pₑ, der beispielsweise am Ausgang der optischen Faser 30 und somit am Eingang 20 der Polarisations-Regelvorrichtung 10 anliegt, wird zunächst mit Hilfe der λ/4-DHF-Flüssigkristallplatte 62 in den linearen Polarisationszustand P' auf dem Äquator der Kugel umgewandelt. Die schnelle Achse S₁ der DHF-Flüssigkristallplatte 62 ist auf dem Schnittpunkt des Äquators mit dem Großkreis LPₑR dargestellt. Anschließend durchläuft das Licht die λ/2-DHF-Flüssigkristallplatte 64, die den Polarisationszustand P' auf dem Äquator in den Polarisationszustand P" auf dem Äquator umwandelt. Die schnelle Achse S₂ der DHF-Flüssigkristallplatte 64 befindet sich auf dem Äquator unter einem Winkel S₁S₂, der gleich dem Winkel <S₁Pₑ + <S₂P' mit dem Winkel <S₂P'=1/2(<S₁S₃-<S₁Pₑ-<S₃Pₐ ist. Anschließend durchläuft das Licht die λ / 4 - DHF-Flüssigkristallplatte 66, die den Polarisationszustand P" in den gewünschten Polarisationszustand Pₐ umwandelt. Die schnelle Achse S₃ der DHF-Flüssigkristallplatte 66 befindet sich auf dem Schnittpunkt des Äquators mit dem Großkreis LPₐ R. Die Achsenorientierung S₃ der DHF-Flüssigkristallplatte 66 der Polarisations-Stelleinrichtung 60 definiert auch den Winkel S₃Pₐ, der zur Bestimmung von S₃ gebraucht wird.

Anstelle der Verwendung von Verzögerungsplatten mit DHF-Flüssigkristallen können Verzögerungsplatten aus Quarzkristall verwendet werden, die jedoch zur Anpassung der zeitlich schwankenden Polarisation des am Faserende austretenden Lichtes an die Polarisation des optischen Faserverstärkers 50 drehbar gelagert sind und mit Hilfe eines Motor unabhängig voneinander gedreht werden können. Der Drehwinkel jeder Quarzkristallplatte läßt sich wiederum nach einer Gradientenmethode im Parameterraum der Poincare-Kugel ermitteln.

### Bezugszeichenliste

- 10: Polarisations-Regelvorrichtung
- 20: Eingang
- 30: optische Faser
- 40: Ausgang
- 50: optischer Faserverstärker
- 60: Polarisations-Stelleinrichtung
- 62: DHF-Flüssigkristallplatte
- 64: DHF-Flüssigkristallplatte
- 66: DHF-Flüssigkristallplatte
- 61: Elektrodenpaar
- 63: Elektrodenpaar
- 65: Elektrodenpaar
- 70: Strahlteiler
- 80: Analysator
- 90: Lichtempfindlicher Detektor
- 100: Steuersignale liefernde Einrichtung

## Patentansprüche

1. Vorrichtung zum Regeln der Polarisation einfallender Lichtstrahlen mit folgenden Merkmalen:
- ein Eingang (20) zum Empfangen von Lichtstrahlen mit einer Polarisation Pₑ,
- ein Ausgang (40) zum Auskoppeln der Lichtstrahlen mit einer vorbestimmten Polarisation Pₐ,
- eine elektrisch ansteuerbare Polarisations-Stelleinrichtung (60) zum Umwandeln der empfangenen Lichtstrahlen mit der Polarisation Pₑ in Lichtstrahlen mit der vorbestimmten Polarisation Pₐ,
- ein der Polarisations-Stelleinrichtung (60) folgender Strahlteiler (70),
- ein Analysator (80) mit der vorbestimmten Polarisation Pₐ,
- ein dem Analysator (80) folgender lichtempfindlicher Detektor (90),
- eine Einrichtung (100) zum Erzeugen von wenigstens einem Steuersignal, die eingangsseitig mit dem lichtempfindlichen Detektor (90) und ausgangsseitig mit der Polarisations-Stelleinrichtung (60) elektrisch verbunden ist.

2. Regelvorrichtung nach Anspruch 1, dadurch gekennzeichnet, daß die Polarisations-Stelleinrichtung (60) wenigstens zwei hintereinander angeordnete, doppelbrechende ferroelektrische Flüssigkristallplatten (62, 64) mit DHF (Deformed Helix Ferroelectric)-Effekt aufweist, die jeweils mit der Steuersignale liefernden Einrichtung (100) elektrisch verbunden sind und deren Indikatrix in Abhängigkeit von den durch die Einrichtung (100) angelegten Steuersignale individuell drehbar ist, wobei die erste ferroelektrische Flüssigkristallplatte (62) eine Verzögerung von im wesentlichen λ/4 + n*λ und die zweite ferroelektrische Flüssigkristallplatte (64) eine Verzögerung von im wesentlichen λ/2 + n*λ besitzt und n eine ganze Zahl größer oder gleich Null ist.

3. Regelvorrichtung nach Anspruch 2, dadurch gekennzeichnet, daß die Polarisations-Stelleinrichtung (60) eine dritte doppelbrechende ferroelektrische Flüssigkristallplatte (66) mit DHF (Deformed Helix Ferroelectric)-Effekt aufweist, die mit der Steuersignale liefernden Einrichtung (100) elektrisch verbunden ist und deren Indikatrix in Abhängigkeit von dem durch die Einrichtung (100) angelegten Steuersignal individuell drehbar ist, wobei die dritte ferroelektrische Flüssigkristallplatte (66) eine Verzögerung von im wesentlichen λ/4 + n*λ besitzt und n eine ganze Zahl größer oder gleich Null ist.

4. Regelvorrichtung nach Anspruch 1 oder 2, dadurch gekennzeichnet, daß die Polarisations-Stelleinrichtung (60) wenigstens zwei hintereinander angeordnete, drehbar gelagerte Quarzkristall-Platten aufweist, die jeweils mit der Steuersignale liefernden Einrichtung (100) elektrisch verbunden und in Abhängigkeit von den durch die Einrichtung (100) angelegten Steuersignalen individuell drehbar sind, wobei die erste Quarzkristallplatte eine Verzögerung von im wesentlichen λ/4 + n*λ und die zweite Quarzkristallplatte eine Verzögerung von im wesentlichen λ/2 + n*λ besitzt, wobei n ≥ 0 und eine ganze Zahl ist.

5. Regelvorrichtung nach Anspruch 4, dadurch gekennzeichnet, daß daß die Polarisations-Stelleinrichtung (60) eine dritte drehbar gelagerte Quarzkristallplatte aufweist, die mit der Steuersignale liefernden Einrichtung (100) elektrisch verbunden und in Abhängigkeit von dem durch die Einrichtung (100) angelegten Steuersignal individuell drehbar ist, wobei die dritte Quarzkristallplatte eine Verzögerung von im wesentlichen λ/4 + n*λ besitzt, wobei n ≥ und eine ganze Zahl ist.

6. Polarisations-Stellvorrichtung zum Einsatz in eine Polarisations-Regelvorrichtung (10) nach einem der Ansprüche 1 bis 5, gekennzeichnet durch wenigstens zwei hintereinander angeordnete, doppelbrechende ferroelektrische Flüssigkristallplatten (62, 64) mit DHF (Deformed Helix Ferroelectric)-Effekt, deren Indikatrix jeweils in Abhängigkeit einer angelegten Spannung individuell drehbar ist, um die Polarisation einfallender Lichtstrahlen in eine vorbestimmte Polarisation umzusetzen, wobei die erste ferroelektrische Flüssigkristallplatte (62) eine Verzögerung von im wesentlichen λ/4 + n*λ und die zweite ferroelektrische Flüssigkristallplatte (64) eine Verzögerung von im wesentlichen λ/2 + n*λ besitzt und n eine ganze Zahl größer oder gleich Null ist.

7. Polarisations-Stellvorrichtung nach Anspruch 6, gekennzeichnet durch eine dritte doppelbrechende ferroelektrische Flüssigkristallplatte (66) mit DHF (Deformed Helix Ferroelectric)-Effekt, deren Indikatrix in Abhängigkeit von einer angelegten Spannung individuell drehbar ist, wobei die dritte ferroelektrische Flüssigkristallplatte (66) eine Verzögerung von im wesentlichen λ/4 + n*λ besitzt und n eine ganze Zahl größer oder gleich Null ist.

8. Polarisations-Stellvorrichtung zum Einsatz in einer Polarisations-Regelvorrichtung nach einem der Ansprüche 1 bis 5, gekennzeichnet durch
wenigstens zwei hintereinander angeordnete, drehbar gelagerte Quarzkristall-Platten, die in Abhängigkeit von einer angelegten Spannung individuell drehbar sind, um die Polarisation einfallender Lichtstrahlen in eine vorbestimmte Polarisation umzusetzen, wobei die erste Quarzkristallplatte eine Verzögerung von im wesentlichen λ/4 + n*λ und die zweite Quarzkristallplatte eine Verzögerung von im wesentlichen λ/2 + n*λ besitzt und n eine ganze Zahl größer oder gleich Null ist.

9. Polarisations-Stellvorrichtung nach Anspruch 9, gekennzeichnet durch
eine dritte drehbar gelagerte Quarzkristallplatte, die in Abhängigkeit von einer angelegten Spannung individuell drehbar ist, wobei die dritte Quarzkristallplatte eine Verzögerung von im wesentlichen λ/4 + n*λ besitzt und n eine ganze Zahl größer oder gleich Null ist.

10. Optisches Kommunikationssystem umfassend
eine Vielzahl von optischen Fasern (30), die eine Vielzahl von optischen Komponenten (50) mit vorbestimmter Polarisation verbinden,
dadurch gekennzeichnet, daß jeder optischen Komponente (50) eine Polarisations-Regelvorrichtung (10) nach einem der Ansprüche 1 bis 5 zugeordnet ist.
